(19) Europäisches Patentamt
European Patent Office
Office européen des brevets

(11) **EP 3 121 537 A1**

(12) # EUROPEAN PATENT APPLICATION
published in accordance with Art. 153(4) EPC

(43) Date of publication:
**25.01.2017 Bulletin 2017/04**

(51) Int Cl.:
***F25B 1/00*** (2006.01)

(21) Application number: **14886641.1**

(86) International application number:
**PCT/JP2014/057047**

(22) Date of filing: **17.03.2014**

(87) International publication number:
**WO 2015/140885 (24.09.2015 Gazette 2015/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Mitsubishi Electric Corporation**
**Chiyoda-ku**
**Tokyo 100-8310 (JP)**

• **Asahi Glass Company, Limited**
**Tokyo 100-8405 (JP)**

(72) Inventor: **YAMASHITA, Koji**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **REFRIGERATION CYCLE APPARATUS**

(57) A refrigeration cycle is filled with a single component refrigerant of a substance having a property of undergoing disproportionation reaction or a mixed refrigerant containing a substance having a property of undergoing disproportionation reaction and a refrigerating machine oil miscible with the refrigerant.

FIG. 1

**Description**

Technical Field

The present invention relates to a refrigeration cycle apparatus of an air-conditioning apparatus or other apparatuses applied, for example, to building multi-air-conditioning apparatuses or other apparatuses.

Background Art

A refrigeration cycle apparatus including a refrigerant circuit configured to circulate refrigerant for air-conditioning such as a building multi-air-conditioning apparatus generally uses a substance containing hydrogen and carbon as refrigerant, where examples of such a substance include non-flammable R410A, low flammable R32, and highly flammable propane. These substances have high stability in the refrigeration cycle apparatus and can be used as refrigerant as long as a few decades although the substances vary in life spend before the substances are decomposed into other substances in the atmosphere when the substances are released into the atmosphere.

In contrast, some substances containing hydrogen and carbon have poor stability even in the refrigeration cycle apparatus and are hardly usable as refrigerant. Examples of such unstable substances include substances having the property of undergoing disproportionation reaction. The disproportionation is a property whereby the same chemical species change into other substances as a result of reactions. For example, in a state where adjacent chemical species in a liquid state are very close to each other, when some kind of strong energy is applied to the refrigerant, the energy causes disproportionation reaction, and consequently, the adjacent species react with each other and thereby change into other substances. When disproportionation reaction occurs, heat is generated, causing sudden temperature rises, which in turn can result in sudden pressure rises. For example, when a substance having the property of undergoing disproportionation reaction is used as refrigerant in a refrigeration cycle apparatus, being enclosed in a pipe of copper or another material, an accident such as a pipe rupture may occur when the pipe can no longer endure pressure rises of the refrigerant in the pipe. Examples of substances known to have the property of causing such disproportionation reaction include 1,1,2-trifluoroethylene (HFO-1123) and acetylene.

Also, a heat cycle system (refrigeration cycle apparatus) uses 1,1,2-trifluoroethylene (HFO-1123) as a working medium for a heat cycle (e.g., Patent Literature 1).

Citation List

Patent Literature

Patent Literature 1: International Publication No. 12/157764 (Page 3, Page 22, Fig. 1, and other items)

Summary of Invention

Technical Problem

In a refrigeration cycle apparatus such as the heat cycle system described in Patent Literature 1, 1,1,2-trifluoroethylene (HFO-1123) is described as being used as a working medium for the heat cycle. 1,1,2-trifluoroethylene (HFO-1123) is a substance having the property of undergoing disproportionation reaction. When this substance is used as it is as refrigerant, in a state where adjacent chemical species in a liquid, two-phase, or similar state are located very close to each other, the adjacent species can react with each other due to some kind of energy and thereby change into other substances, not only ceasing to serve as refrigerant, but also causing an accident such as a pipe rupture due to sudden pressure rises. Thus, there is a problem in that 1,1,2-trifluoroethylene (HFO-1123) has to be used as refrigerant in such a way 1,1,2-trifluoroethylene (HFO-1123) does not undergo such disproportionation reaction. Thus, a solution is necessary to prevent the disproportionation reaction, but Patent Literature 1 and other conventional literatures make no mention of a method of implementing an apparatus that prevents disproportionation reaction.

The present invention has been made to solve the above problem and provides a refrigeration cycle apparatus that can reduce energy applied from outside to refrigerant and safely use a substance having the property of undergoing disproportionation reaction as refrigerant.

Solution to Problem

A refrigeration cycle apparatus according to one embodiment of the present invention includes a refrigeration cycle connecting a compressor, a first heat exchanger, an expansion device, and a second heat exchanger by refrigerant pipes. The refrigeration cycle is filled with a single component refrigerant of a substance having a property of undergoing disproportionation reaction or a mixed refrigerant containing a substance having a property of undergoing disproportionation reaction and a refrigerating machine oil miscible with the refrigerant.

Advantageous Effects of Invention

The refrigeration cycle apparatus according to one embodiment of the present invention prevents a substance, such as 1,1,2-trifluoroethylene (HFO-1123), having the property of undergoing disproportionation reaction from undergoing disproportionation reaction and becoming unavailable for use as refrigerant and causing an accident such as a pipe rupture, and thereby allows the substance to be used safely as refrigerant.

Brief Description of Drawings

[Fig. 1] Fig. 1 is a schematic diagram illustrating an installation example of a refrigeration cycle apparatus according to Embodiment 1 of the present invention.
[Fig. 2] Fig. 2 is a circuit block diagram of the refrigeration cycle apparatus according to Embodiment 1 of the present invention.
[Fig. 3] Fig. 3 is a circuit block diagram of the refrigeration cycle apparatus according to Embodiment 1 of the present invention during cooling operation.
[Fig. 4] Fig. 4 is a circuit block diagram of the refrigeration cycle apparatus according to Embodiment 1 of the present invention during heating operation.
[Fig. 5] Fig. 5 is a solubility diagram illustrating refrigerating machine oil of the refrigeration cycle apparatus according to Embodiment 1 of the present invention.
[Fig. 6] Fig. 6 is a schematic cross-sectional view of a configuration example in which grooving has been applied to an inner surface (heat transfer surface) of a heat transfer tube used for the heat exchanger of the refrigeration cycle apparatus according to Embodiment 1 of the present invention.
[Fig. 7] Fig. 7 is a schematic diagram illustrating another heat transfer tube of the heat exchanger of the refrigeration cycle apparatus according to Embodiment 1 of the present invention.
[Fig. 8] Fig. 8 is a schematic diagram illustrating a configuration of an expansion device of the refrigeration cycle apparatus according to Embodiment 1 of the present invention.
[Fig. 9] Fig. 9 is a schematic diagram illustrating a configuration of an accumulator of the refrigeration cycle apparatus according to Embodiment 1 of the present invention.
[Fig. 10] Fig. 10 is a circuit block diagram of the refrigeration cycle apparatus according to Embodiment 2 of the present invention.

Description of Embodiments

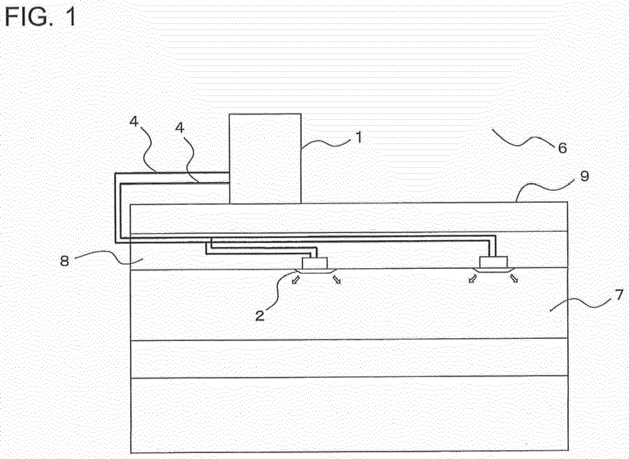

A refrigeration cycle apparatus according to embodiments of the present invention will be described hereinafter with reference to the drawings. In the following drawings including Fig. 1, the same components or equivalent components are denoted by the same reference signs and are common throughout the entire text of the embodiments described below. The forms of the components described in the entire text of the specification are merely exemplary, and the components are not limited to the forms described herein. In particular, combinations of components are not limited to those described in any of the embodiments, and components described in one embodiment may be applied to another embodiment. Furthermore, plural units of the same components distinguished by subscripts may be described without the subscripts when there is no need to distinguish or identify the units from one another. Also, in the drawings, components may not be shown in their actual size relations. Besides, magnitudes of temperature, pressures, and other parameters are not determined in relation to absolute values, but are determined on a relative basis depending on conditions, operations, and other factors of systems and apparatuses.

Embodiment 1

Embodiment 1 of the present invention will be described with reference to drawings. Fig. 1 is a schematic diagram illustrating an installation example of a refrigeration cycle apparatus according to Embodiment 1 of the present invention. By constructing a refrigerant circuit configured to circulate refrigerant and using a refrigeration cycle of the refrigerant, the refrigeration cycle apparatus shown in Fig. 1 allows either a cooling mode or a heating mode to be selected as an operation mode. Here, the refrigeration cycle apparatus according to Embodiment 1 will be described by taking as an example an air-conditioning apparatus configured to air-condition an air-conditioned space (indoor space 7).
In Fig. 1, the refrigeration cycle apparatus according to Embodiment 1 includes an outdoor unit 1 that is a heat source unit and plural indoor units 2. The outdoor unit 1 and the indoor units 2 are connected with each other by extension pipes (refrigerant pipes) 4 through which refrigerant is allowed to pass and cooling energy or heating energy generated by the outdoor unit 1 are designed to be delivered to the indoor units 2.
The outdoor unit 1 is usually placed in an outdoor space 6 that is a space (e.g., rooftop) outside a building 9 and supplies cooling energy or heating energy to the indoor units 2. Each indoor unit 2 is placed at a position each indoor unit 2 can supply temperature-controlled air to an indoor space 7 that is a space (e.g., a living room) in the building 9 and supplies cooling air or heating air to the indoor space 7, which is an air-conditioned space.
As shown in Fig. 1, in the refrigeration cycle apparatus according to Embodiment 1, the outdoor unit 1 and each indoor unit 2 are connected with each other using the two extension pipes 4.
Note that although Fig. 1 shows an example in which the indoor unit 2 is a ceiling cassette type, the present invention is not limited to this configuration. Any type of indoor unit, such as a ceiling concealed type and ceiling suspended type, may be used as long as the indoor unit is designed to be able to send heating air or cooling air into the indoor space 7 either directly or via a duct or other components.

Although Fig. 1 shows an example in which the outdoor unit 1 is installed in the outdoor space 6, the present invention is not limited to this configuration. For example, the outdoor unit 1 may be installed in a walled-in space, such as a machine room, provided with a vent. Also, when waste heat can be discharged out of the building 9 through an exhaust duct, the outdoor unit 1 may be installed inside the building 9. Furthermore, a water-cooled outdoor unit 1 may be installed inside the building 9. Wherever the outdoor unit 1 may be installed, no particular problem arises.

Also, the numbers of outdoor units 1 and indoor units 2 to be connected are not limited to those illustrated in Fig. 1, and may be determined depending on the building 9 in which the refrigeration cycle apparatus according to Embodiment 1 is installed.

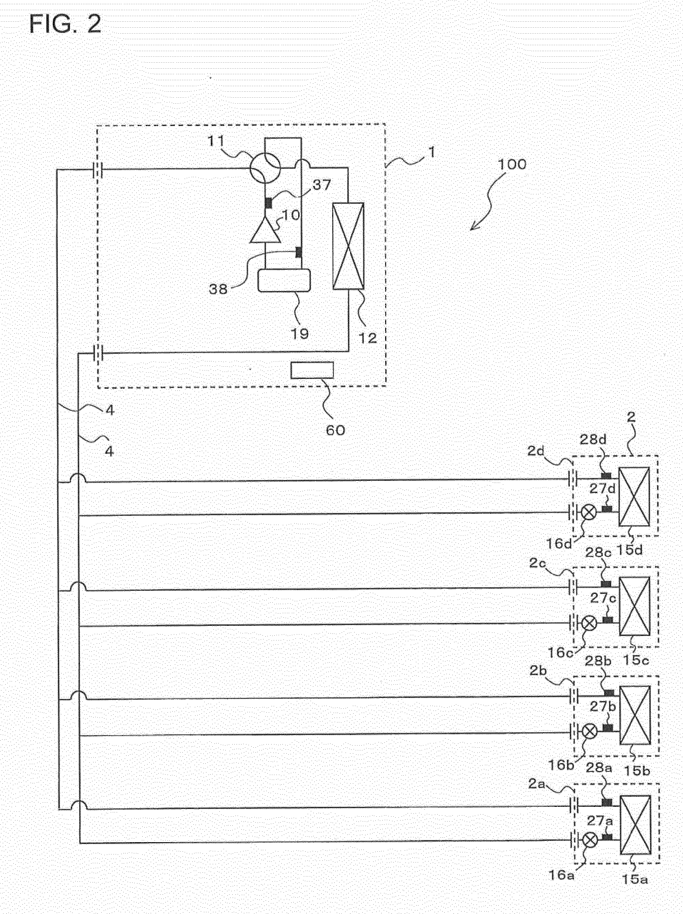

Fig. 2 is a circuit block diagram illustrating an example of a circuit configuration of the refrigeration cycle apparatus (hereinafter referred to as the refrigeration cycle apparatus 100) according to Embodiment 1 of the present invention. Detailed configuration of the refrigeration cycle apparatus 100 will be described with reference to Fig. 2. As shown in Fig. 2, the outdoor unit 1 and the indoor units 2 are connected with each other via extension pipes (refrigerant pipes) 4 through which the refrigerant flows.

[Outdoor unit 1]

The outdoor unit 1 is equipped with a compressor 10, a first refrigerant flow switching device 11 such as a four-way valve, a heat source side heat exchanger 12, and an accumulator 19 that are connected in series via refrigerant pipes.

The compressor 10, which sucks refrigerant and compresses the refrigerant into a high-temperature, high-pressure state, is preferred to be, for example, of a capacity-controllable inverter compressor. The first refrigerant flow switching device 11 switches between refrigerant flow during heating operation and refrigerant flow during cooling operation. The heat source side heat exchanger 12 acts as an evaporator during heating operation and acts as a condenser (or radiator) during cooling operation. The heat source side heat exchanger 12 serving as a first heat exchanger exchanges heat between air supplied from a fan (not illustrated) and the refrigerant and evaporates and gasifies or condenses and liquefies the refrigerant. The heat source side heat exchanger 12 acts as a condenser during cooling operation for the indoor space 7 and acts as an evaporator during heating operation for the indoor space 7. The accumulator 19 is installed on a suction side of the compressor 10 and accumulates surplus refrigerant produced by changes in operation mode or other factors in the refrigerant circuit.

The outdoor unit 1 includes the compressor 10, the first refrigerant flow switching device 11, the heat source side heat exchanger 12, the accumulator 19, a high-pressure detector 37, a low-pressure detector 38, and a controller 60. Also, the compressor 10 has, for example, a compression chamber in an airtight container, and may have a low-pressure shell structure in which a low-pressure refrigerant atmosphere prevails in the airtight container and that compresses low-pressure refrigerant sucked from the airtight container or a high-pressure shell structure in which a high-pressure refrigerant atmosphere prevails in the airtight container and that discharges high-pressure refrigerant compressed in the compression chamber into the airtight container. Also, the outdoor unit 1 includes the controller 60, and controls components based on detection information from various detectors, instructions from a remote control and other factors. The controller 60 is designed to control, for example, driving frequency of the compressor 10, rotation speed (including turning on and off) of the fan, switching of the first refrigerant flow switching device 11, and other operations and run various operation modes described later. The controller 60 according to Embodiment 1 is a microcomputer or another computer equipped, for example, with a control arithmetic processing unit such as a CPU (Central Processing Unit). Also, the controller 60 includes a storage unit (not illustrated) and contains data obtained by incorporating processing procedures related to control and other operations into a program. Then, the control arithmetic processing unit performs processing based on program data and thereby implements control.

[Indoor unit 2]

Each indoor unit 2 is equipped with a load side heat exchanger 15 serving as a second heat exchanger. The load side heat exchanger 15 is designed to be connected with the outdoor unit 1 via the extension pipes 4. The load side heat exchanger 15 exchanges heat between air supplied from a fan (not illustrated) and the refrigerant and generates heating air or cooling air to be supplied to the indoor space 7. The load side heat exchanger 15 acts as a condenser during heating operation for the indoor space 7. On the other hand, during cooling operation for the indoor space 7, the load side heat exchanger 15 acts as an evaporator.

Fig. 2 shows an example in which four indoor units 2 are connected and illustrates an indoor unit 2a, an indoor unit 2b, an indoor unit 2c, an indoor unit 2d, in this order from the bottom of Fig. 2. Also, the load side heat exchangers 15 corresponding to the indoor units 2a to 2d are illustrated as a load side heat exchanger 15a, a load side heat exchanger 15b, a load side heat exchanger 15c, a load side heat exchanger 15d, in this order from the bottom of Fig. 2. Note that as with Fig. 1, the number of indoor units 2 to be connected is not limited to four as illustrated in Fig. 2.

Operation modes performed by the refrigeration cycle apparatus 100 will be described. The refrigeration cycle apparatus 100 sets operation mode of the outdoor unit 1 to either cooling operation mode or heating operation mode based on instructions from the indoor units 2. That is, the refrigeration cycle apparatus 100 can perform the same operation (cooling operation or heating operation) on all the indoor units 2 and thereby regulate a temperature in a room. Note that in both cooling operation mode and heating operation mode, each indoor unit 2 can be operated and stopped freely.

The operation modes performed by the refrigeration cycle apparatus 100 includes the cooling operation mode in which all the running indoor units 2 perform cooling operation (stopping the cooling operation is included) and the heating operation mode in which all the running indoor units 2 perform heating operation (stopping the cooling operation is included). Each of the operation modes will be described below together with flows of refrigerant.

[Cooling operation mode]

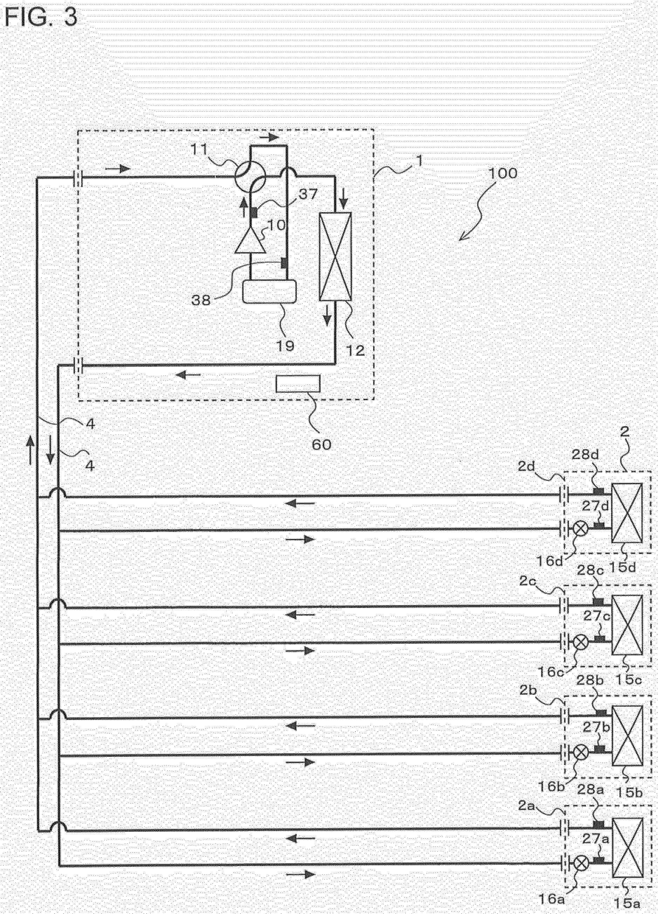

Fig. 3 is a refrigerant circuit diagram illustrating flows of refrigerant in the cooling operation mode when discharge temperature of the refrigeration cycle apparatus 100 is low. In Fig. 3, the cooling operation mode will be described by taking as an example a case in which a cooling load is generated in each load side heat exchanger 15. Note that in Fig. 3, the thick lines indicate pipes through which the refrigerant flows and that the solid arrows indicate directions of refrigerant flow.

In the cooling operation mode shown in Fig. 3, the outdoor unit 1 switches the first refrigerant flow switching device 11 so that the refrigerant discharged from the compressor 10 flows into the heat source side heat exchanger 12. Low-temperature, low-pressure refrigerant is compressed by the compressor 10 and discharged as high-temperature, high-pressure gas refrigerant. The high-temperature, high-pressure gas refrigerant discharged from the compressor 10 flows into the heat source side heat exchanger 12 through the first refrigerant flow switching device 11. Then, the refrigerant condenses and liquefies while transferring heat to outdoor air in the heat source side heat exchanger 12 and flows out of the outdoor unit 1 as high-pressure liquid refrigerant.

The high-pressure liquid refrigerant flowing out of the outdoor unit 1 flows into each of the indoor units 2 (2a to 2d) through the extension pipes 4. The high-pressure liquid refrigerant flowing into the indoor units 2 (2a to 2d) flows into expansion devices 16 (16a to 16d) and then becomes low-temperature, low-pressure, two-phase refrigerant by being throttled to be depressurized by the expansion devices 16 (16a to 16d). Furthermore, the refrigerant flows into each of the load side heat exchangers 15 (15a to 15d) acting as evaporators, receives heat from the air flowing around the load side heat exchangers 15, and thereby becomes low-temperature, low-pressure, gas refrigerant. Then, the low-temperature, low-pressure, gas refrigerant flows out of the indoor units 2 (2a to 2d), flows into the outdoor unit 1 again through the extension pipes 4, passes through the first refrigerant flow switching device 11, and is sucked into the compressor 10 again through the accumulator 19.

At this time, opening degrees (opening areas) of the expansion devices 16a to 16d are controlled so that a temperature difference (degree of superheat) between a detected temperature of a load side heat exchanger gas refrigerant temperature detector 28 and an evaporating temperature transmitted to a controller (not illustrated) of each indoor unit 2 from the controller 60 of the outdoor unit 1 through communication approaches a target value.

Note that in the cooling operation mode, no refrigerant is needed to be sent to these load side heat exchangers 15 that are free from heat loads (the load side heat exchangers 15 in a thermostat-off state are included), and thus operations of such heat exchangers are stopped. At this time, the expansion devices 16 corresponding to the stopped indoor units 2 are set to be fully closed or to have such a small opening degree that the refrigerant does not flow.

[Heating operation mode]

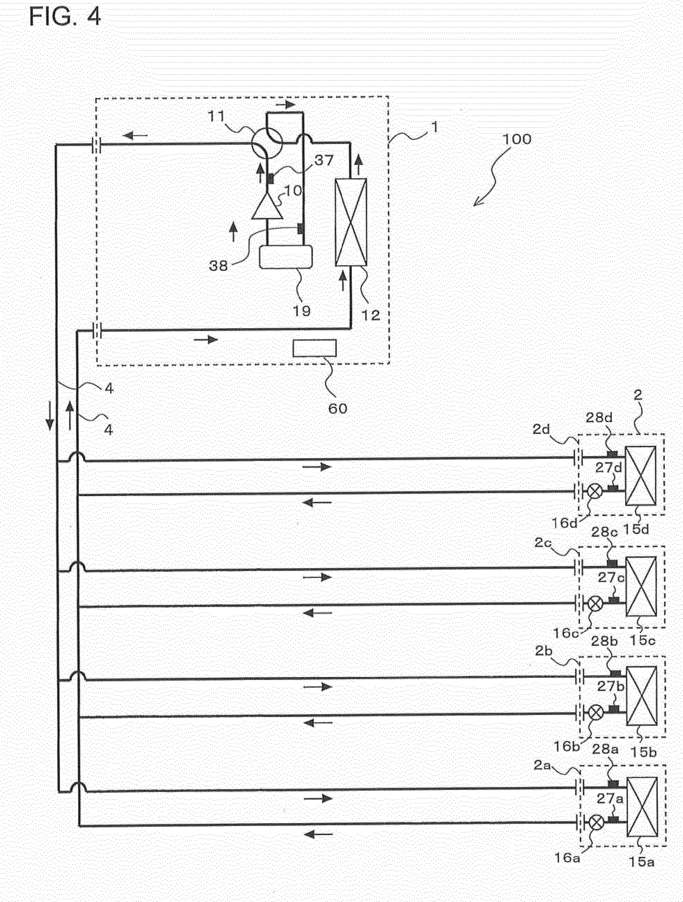

Fig. 4 is a refrigerant circuit diagram illustrating flows of refrigerant in the heating operation mode of the refrigeration cycle apparatus 100. In Fig. 4, the heating operation mode will be described by taking as an example a case in which a heating load is generated in each load side heat exchanger 15. Note that in Fig. 4, the thick lines indicate pipes through which the refrigerant flows and that the solid arrows indicate directions of refrigerant flow.

In the heating operation mode shown in Fig. 4, the outdoor unit 1 switches the first refrigerant flow switching device 11 so that the refrigerant discharged from the compressor 10 flows into the indoor units 2 without passing through the heat source side heat exchanger 12. Low-temperature, low-pressure refrigerant is compressed by the compressor 10, discharged as high-temperature, high-pressure gas refrigerant, and flows out of the outdoor unit 1 by passing through the first refrigerant flow switching device 11. The high-temperature, high-pressure gas refrigerant flowing out of the outdoor unit 1 flows into each of the indoor units 2 (2a to 2d) through the extension pipes 4. The high-temperature, high-pressure gas refrigerant flowing into the indoor units 2 (2a to 2d) flows into the respective load side heat exchangers 15 (15a to 15d), condenses and liquefies by transferring heat to the air flowing around the load side heat exchangers 15 (15a to 15d) and thereby becomes high-temperature, high-pressure liquid refrigerant. The high-temperature, high-pressure liquid refrigerant flowing out of the load side heat exchangers 15 (15a to 15d) flows into the expansion devices 16 (16a to 16d), becomes low-temperature, low-pressure, two-phase refrigerant by being throttled by the expansion devices 16 (16a to 16d) to be depressurized, and flows out of the indoor units 2 (2a to 2d). The low-temperature, low-pressure, two-phase refrigerant flowing out of the indoor units 2 flows into the outdoor unit 1 again through the extension pipes 4.

At this time, opening degrees (opening areas) of the expansion devices 16a to 16d are controlled so that a temperature difference (degree of subcooling) between a condensing temperature transmitted to a controller (not illustrated) of each indoor unit 2 from the controller 60 of the outdoor unit 1 through communication and a detected temperature of a load side heat exchanger liquid refrigerant temperature detector 27 approaches a target value.

The low-temperature, low-pressure, two-phase refrigerant flowing into the outdoor unit 1 flows into the heat source side heat exchanger 12, receives heat from the air flowing around the heat source side heat exchanger 12, and evaporates to become low-temperature, low-pressure, gas refrigerant or low-temperature, low-pressure, two-phase refrigerant of high quality. (A dryness of refrigerant is referred to as a quality in this description.) The low-temperature, low-pressure, gas refrigerant or two-phase refrigerant is sucked into the compressor 10 again through the first refrigerant flow switching device 11 and the accumulator 19.

In the heating operation mode, no refrigerant is needed to be sent to the load side heat exchangers 15 that are free from heat loads (the load side heat exchangers 15 in a thermostat-off state are included). However, in the heating operation mode, when the expansion devices 16 corresponding to the load side heat exchangers 15 free from heating loads are set to be fully closed or to have such a small opening degree that the refrigerant does not flow, the refrigerant condenses by being cooled by ambient air and collect in the load side heat exchangers 15 that are not operating and the refrigerant circuit as a whole may run short of refrigerant. Thus, during heating operation, the expansion devices 16 corresponding to the load side heat exchangers 15 free from heat loads are set to have a large opening degree (opening area) such as a fully opened degree to prevent the refrigerant from collecting.

Also, a four-way valve is generally used as the first refrigerant flow switching device 11, but the present invention is not limited to this configuration. Plural two-way flow switching valves or three-way flow switching valves may be used to cause the refrigerant to flow similarly to the description above.

Also, whereas description has been given here of a case in which the accumulator 19 is provided to accumulate surplus refrigerant in the refrigerant circuit, when the extension pipes 4 are short or when only a single indoor unit 2 is installed, no accumulator 19 is needed to be installed because the amount of surplus refrigerant is small.

[Types of refrigerant]

When a substance such as R32 and R410A normally used as refrigerant is used as refrigerant in the refrigeration cycle apparatus 100, the substance such as R32 and R410A can be used as it is in the usual way without taking measures to improve stability of the refrigerant in the refrigerant circuit. However, it is assumed that the refrigerant used here is a single component refrigerant of a substance having the property of undergoing disproportionation reaction or a mixed refrigerant containing a substance having the property of undergoing disproportionation reaction and another substance, where examples of the substance having the property of undergoing disproportionation reaction include 1,1,2-trifluoroethylene (HFO-1123) expressed by $C_2H_1F_3$ and provided with one double bond in its molecular structure.

Examples of the substance having the property of undergoing disproportionation reaction to be mixed to produce the mixed refrigerant include tetrafluoropropene expressed by $C_3H_2F_4$ (such as HFO-1234yf that is 2,3,3,3-tetrafluoropropene expressed by $CF_3CF=CH_2$ and HFO-1234ze that is 1,3,3,3-tetrafluoro-1-propene expressed by $CF_3CH=CHF$) and difluoromethane (HFC-32) whose chemical formula is $CH_2F_2$. However, the substance mixed with the substance having the property of undergoing disproportionation reaction is not limited to these substances, and may be HC-290 (propane) or another similar substance. Any substance may be used as long as the substance has sufficient thermal performance to be used as refrigerant in the refrigeration cycle apparatus 100. Also, any mixture ratio may be used.

As described above, when the substance having the property of undergoing disproportionation reaction is used as it is as refrigerant, the substance presents the following problems. That is, in a state where adjacent chemical species in a liquid, two-phase, or similar state are located very close to each other, when some kind of strong energy is applied to the refrigerant, the adjacent species react with each other and thereby change into other substances, ceasing to serve as refrigerant. Moreover, sudden pressure rises due to heat generation may cause an accident such as a pipe rupture. Thus, to use a substance having the property of undergoing disproportionation reaction as refrigerant, a solution is necessary to prevent the disproportionation reaction in a liquid part or a two-phase part in which a gas and liquid are mixed. Here, collision energy resulting from a collision between the refrigerant and components can also be a factor contributing to disproportionation reaction of the refrigerant.

[Refrigerating machine oil]

Refrigerating machine oil filled into the refrigerant circuit has either polyol ester or polyvinyl ether as a major component. Part of the refrigerating machine oil filled into the compressor 10 circulates in the refrigerant circuit together with the refrigerant. Both polyol ester and polyvinyl ether are refrigerating machine oils miscible with, and thus readily soluble in, refrigerants that have one double bond in their molecular structure.

The refrigerating machine oil is miscible with HFO1123, which is a refrigerant. Thus, HFO-1123 dissolves in the refrigerating machine oil to some extent.

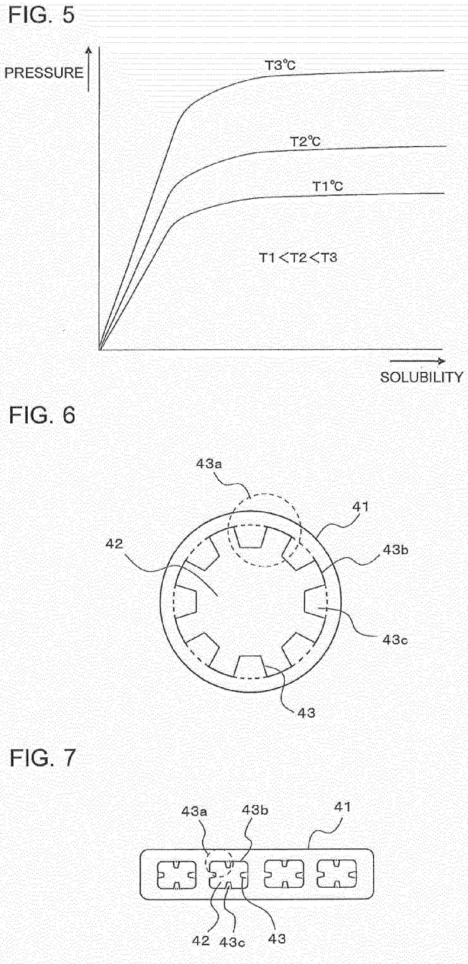

Fig. 5 is a solubility diagram illustrating the refrigerating machine oil of the refrigeration cycle apparatus according to Embodiment 1 of the present invention. A high solubility means that a large amount of refrigerant dissolves in the refrigerating machine oil and a low solubility means that only a small amount of refrigerant dissolves in the refrigerating machine oil. Fig. 5 shows relationships between solubility and pressure at different refrigerant temperatures T1, T2, and T3. Note that in Fig. 5, T1, T2, and T3 are different refrigerant temperatures, among which Formula (1) holds.
[Formula 1]

$$T1 < T2 < T3 \qquad (1)$$

As shown in Fig. 5, under the same pressure conditions, the lower the refrigerant temperature is, the higher the solubility is, and under the same temperature conditions, the higher the refrigerant pressure is, the higher the solubility is. When the refrigerant dissolves in refrigerating machine oil, molecules of the refrigerating machine oil exist among molecules of the refrigerant. That is, when the refrigerant has a high solubility in the refrigerating machine oil, the refrigerating machine oil exists among a large quantity of refrigerant molecules. Since the disproportionation reaction of refrigerant is a phenomenon in which adjacent molecules of the refrigerant react with each other as described earlier, when refrigerating machine oil miscible with the refrigerant is used, molecules of the refrigerating machine oil exist among the refrigerant molecules, thereby making disproportionation reaction less likely to occur.

To control the disproportionation reaction of refrigerant, a larger effect is produced by a higher solubility of the refrigerant in refrigerating machine oil. In practical use, a solubility of 50 wt% (weight percent) or above allows a large amount of refrigerant to dissolve in the refrigerating machine oil, thereby controlling disproportionation reaction.

[Heat source side heat exchanger 12 or load side heat exchangers 15 (15a to 15d)]

With the refrigeration cycle apparatus 100, when the indoor units 2 are performing cooling operation, low-temperature, low-pressure, two-phase refrigerant flows into the load side heat exchangers 15 (15a to 15d) to evaporate and gasify and flows out of the load side heat exchangers 15 (15a to 15d) as low-temperature, low-pressure, gas refrigerant. Also, when the indoor units 2 are performing heating operation, high-temperature, high-pressure gas refrigerant flows into the load side heat exchangers 15 (15a to 15d). The refrigerant flowing into the load side heat exchangers 15 (15a to 15d) condenses to become two-phase refrigerant, liquefies, and flows out of the load side heat exchangers 15 (15a to 15d) as high-temperature, high-pressure liquid refrigerant.

Also, in the cooling operation mode, high-temperature, high-pressure gas refrigerant flows into the heat source side heat exchanger 12, condenses to become two-phase refrigerant, liquefies, and flows out as high-temperature, high-pressure liquid refrigerant. Also, in the heating operation mode, low-temperature, low-pressure, two-phase refrigerant flows into the heat source side heat exchanger 12, evaporates, and flows out as low-temperature, low-pressure, two-phase refrigerant of high quality.

Fig. 6 is a schematic cross-sectional view of a configuration example in which grooving is applied to the inner surface (heat transfer surface) of the heat transfer tube used for the heat exchanger of the refrigeration cycle apparatus according to Embodiment 1 of the present invention.

Inner part of the heat transfer tube 41 provides a passage 42 through which the refrigerant flows. Plural grooves 43 are formed at circumferential intervals in the inner surface of the heat transfer tube 41, extending in a tube axis direction and making the inner surface of the heat transfer tube 41 to be a concavo-convex surface 43a. When the concavo-convex surface 43a is formed by grooving the inner surface of the heat transfer tube 41, a boundary layer of the refrigerant is disturbed under the influence of the concavo-convex surface 43a, increasing intensity of turbulence of the refrigerant.

The refrigerant flows through the heat transfer tube 41 with its flow speed increased in concave portions 43b of the concavo-convex surface 43a in the heat transfer tube 41 while repeating collisions with convex portions 43c. Consequently, generally, when the inner surface of the heat transfer tube 41 is grooved, not only the heat transfer coefficient but also pressure loss of the refrigerant increase. Thus, the grooves 43 in the heat transfer tube 41 of the heat exchanger (12 or 15) can be a contributing factor in causing the refrigerant to undergo disproportionation reaction. The grooves 43 in the heat transfer tube 41 are often formed into a shape (e.g., a helical shape extending in the tube axis direction) increasing the effect of disturbing the refrigerant flow, and in this case, the effect is further increased.

Note that Fig. 6 is an example of grooving and the shape is not limited to this example. Also, the grooves 43 do not have to be helical, and any shape results in a similar situation as long as a concavo-convex surface 43a is formed in the inner surface of the heat transfer tube 41 and is shaped to disturb the flow of refrigerant. Thus, when the inner surface of the heat transfer tube 41 is grooved, disproportionation reaction of the refrigerant is likely to occur, but when refrigerating machine oil miscible with the refrigerant is used, the refrigerant and refrigerating machine oil dissolve in each other, allowing molecules of refrigerating machine oil to exist among refrigerant molecules and thereby making disproportionation reaction of the refrigerant less likely to occur.

Fig. 7 is a schematic diagram of another heat transfer tube used for the heat exchanger of the refrigeration cycle apparatus according to Embodiment 1 of the present invention.

Fig. 7 shows a flat tube with a flat channel structure whose interior is divided into plural (four in this case) passages 42. The flat tube further has grooves 43 formed in each of the passages 42 to have a concavo-convex surface 43a on an inner surface of the passages 42. A flat tube of the flat channel structure shown in Fig. 7 may be used as the heat transfer tube 41. Even when such a flat tube of the flat channel structure is used, as is the case when a circular tube is used, use of refrigerating machine oil miscible with the refrigerant makes disproportionation reaction of the refrigerant less likely to occur. Also, the heat transfer tube 41 and the passages 42 may have any shape and can achieve similar effects.

Note that although description has been given above by taking as an example a case in which the concavo-convex surface 43a is provided on the inner surface (heat transfer surface) of the heat transfer tube 41 as a heat transfer enhancement mechanism configured to enhance heat transfer, the heat transfer enhancement mechanism is not limited to the concavo-convex surface 43a. For example, a configuration may be adopted in which the heat transfer tube 41 itself is a smooth tube (circular tube) with a smooth inner surface and the heat transfer tube 41 is provided with a heat transfer enhancement mechanism, such as a twisted tube formed into a spiral shape, inserted into inner part of the heat transfer tube 41. The same can be said again and effects similar to those described above can be achieved.

Note that usually with building multi-air-conditioning apparatuses or other related apparatuses, condensing temperature that is the temperature of the refrigerant in the condenser is controlled to be approximately 50 degrees C mainly in the heating operation mode and in other similar modes by controlling frequency of the compressor 10 or rotation speed of a fan (not illustrated) attached to the heat source side heat exchanger 12. Also, by controlling the expansion device 16, a degree of subcooling of the refrigerant at a condenser outlet is controlled to be approximately 10 degrees C. Consequently, when the condensing temperature is approximately 50 degrees C, the refrigerant temperature at the condenser outlet is controlled to be approximately 40 degrees C. That is, the two-phase refrigerant in the condenser is at a temperature of approximately 50 degrees C and at the saturation pressure at a temperature of approximately 50 degrees C and as the liquid refrigerant in the condenser approaches the condenser outlet, its temperature changes from approximately 50 degrees C to approximately 40 degrees C and its pressure is at the saturation pressure at a temperature of approximately 50 degrees C.

Also, evaporating temperature that is the temperature of the refrigerant in the evaporator is controlled to be approximately 0 degrees C mainly in the cooling operation mode and in other similar modes by controlling the frequency of the compressor 10 or rotation speed of the fan (not illustrated) attached to the heat source side heat exchanger 12. Also, a degree of superheat of the refrigerant at an evaporator outlet is controlled to be approximately 0 to 5 degrees C. That is, an almost entire region in the evaporator is in two phases and the refrigerant is at a temperature of approximately 0 degrees C and at the saturation pressure at a temperature of approximately 0 degrees C.

Thus, when the refrigerant is under these temperature and pressure conditions and the refrigerant has a high solubility in the refrigerating machine oil, disproportionation reaction is less likely to occur. In practical use, when the refrigerant is under these temperature and pressure conditions and the refrigerant has a solubility of 50 wt% (weight percent) or above in the refrigerating machine oil, a large amount of refrigerant dissolves in the refrigerating machine oil, thereby controlling disproportionation reaction. That is, when the refrigerant flowing through the heat exchanger (12 or 15) dissolves in the refrigerating machine oil with a solubility of 50 wt% (weight percent) or above, disproportionation reaction is less likely to occur even if the refrigerant passes through the heat transfer tube 41 provided with a heat transfer enhancement mechanism. Note that the liquid refrigerant or two-phase refrigerant does not need to flow everywhere in the passages 42 in the heat transfer tube 41 of the heat exchanger (12 or 15). Disproportionation reaction is likely to occur when a heat transfer enhancement mechanism such as the concavo-convex surface 43a exists in locations where the liquid refrigerant or two-phase refrigerant flows, and thus the liquid refrigerant or two-phase refrigerant is only required to flow in some part of the passages 42 in the heat transfer tube 41 of the heat exchanger (12 or 15).

[Expansion devices 16 (16a to 16d)]

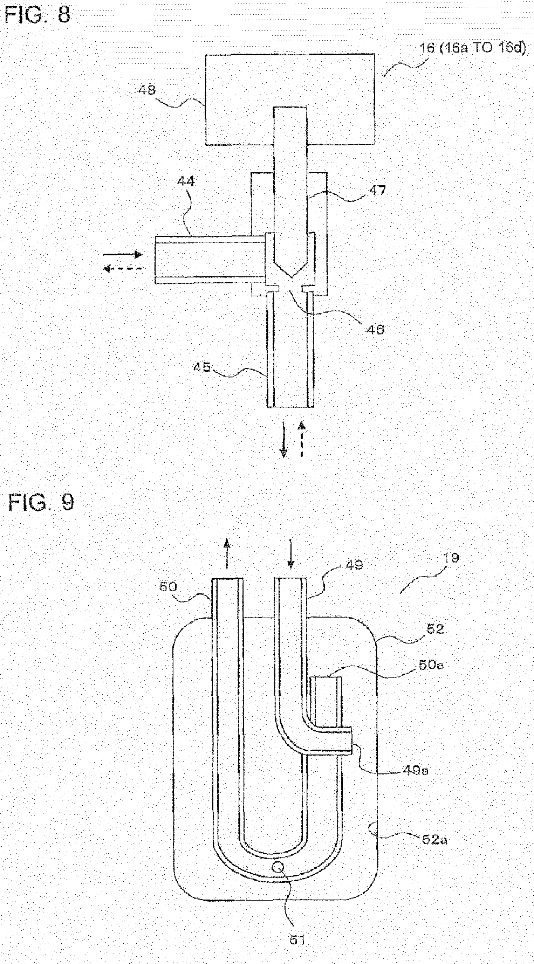

Fig. 8 is a schematic diagram illustrating a configuration of an expansion device of the refrigeration cycle apparatus according to Embodiment 1 of the present invention. In Fig. 8, the expansion device 16 (16a to 16d) includes a first connecting pipe 44, a second connecting pipe 45, an expansion unit 46, a valve body 47, and a motor 48. In Fig. 8, the solid arrows indicate directions of refrigerant flow during heating operation and dashed arrows indicate directions of refrigerant flow during cooling operation.

During cooling operation, high-pressure liquid refrigerant or two-phase refrigerant flowing out of the outdoor unit 1 and flowing into the indoor unit 2 flows into the expansion device 16 through the second connecting pipe 45. The high-pressure liquid refrigerant or two-phase refrigerant flowing in through the second connecting pipe 45 is throttled in the expansion unit 46 by the valve body 47 inserted into the expansion unit 46 to be depressurized to become low-temperature, low-pressure, two-phase refrigerant. Then, the low-temperature, low-pressure, two-phase refrigerant flows out of the first connecting pipe 44 and flows into the load side heat exchanger 15 (15a to 15d).

Also, during heating operation, high-pressure liquid refrigerant or two-phase refrigerant flowing out of the outdoor unit 1 and flowing into the indoor unit 2 passes through the load side heat exchanger 15 (15a to 15d) and then flows into the expansion device 16 through the first connecting pipe 44. The high-pressure liquid refrigerant or two-phase refrigerant flowing in through the first connecting pipe 44 is throttled in the expansion unit 46 by the valve body 47 to be depressurized to become low-temperature, low-pressure, two-phase refrigerant. Then, the low-temperature, low-pressure, two-phase refrigerant flows out of the second connecting pipe 45 and flows out of the indoor unit 2.

Here, an amount of throttling of the refrigerant is controlled by changing a position (vertical position in Fig. 8) of the valve body 47 using the motor 48. That is, as the position of the valve body 47 is changed, an amount of insertion of the valve body 47 into the expansion unit 46 changes, changing an area (opening area) of a gap between the expansion unit 46 and the valve body 47 and thereby controlling the amount of throttling of the refrigerant. Note that a cross sectional passage area of the expansion unit 46 that is provided between the first connecting pipe 44 and the second connecting pipe 45 and through which the refrigerant flows is smaller than an internal cross sectional area of each of the first connecting pipe 44 and the second connecting pipe 45. A stepping motor or another related motor is available as the motor 48 used in the expansion device 16, and the valve body 47 rotates to move (vertical movement in Fig. 8) and thereby changes the area (opening area) of the gap between the expansion unit 46 and the valve body 47. Incidentally, the valve body 47 is often cylindrical in shape. The cylindrical shape makes the valve body 47 easy to use as a component of the expansion device 16 because the valve body 47 does not change its cross sectional area when the valve body 47 is rotated to be moved in an axial direction of the valve body 47.

In the expansion device 16 (16a to 16d), a flow direction of the refrigerant flowing in through the first connecting pipe 44 and a flow direction of the refrigerant flowing out through the second connecting pipe 45 are substantially orthogonal to each other. During cooling operation, the refrigerant in liquid state or in two-phase state collides with the cylindrical valve body 47 from a crosswise direction (circumference direction). During heating operation, the refrigerant in liquid state or in two-phase state collides with the cylindrical valve body 47 in a lengthwise direction (axial direction).

When the refrigerant in liquid state or in two-phase state flows into the expansion device 16, collision energy produced at the time of collision between the refrigerant and the valve body 47 may cause disproportionation reaction of the refrigerant. However, even in this case, when refrigerating machine oil miscible with the refrigerant is used, the refrigerant and the refrigerating machine oil dissolve in each other, allowing molecules of refrigerating machine oil to exist among refrigerant molecules and thereby making disproportionation reaction of the refrigerant less likely to occur.

Note that the expansion device 16 (16a to 16d), can be either an expansion device of a direct acting type that drives the valve body 47 directly with the motor 48 and an expansion device of a gear type in which a gear is interposed between the motor 48 and the valve body 47. Also, the motor 48 is not limited to a stepping motor, and any type of motor may be used. Also, the expansion device 16 is not limited to a motor-driven type, and may be a mechanical expansion device.

Also, as described above, usually with building multi-air-conditioning apparatuses or other related apparatuses, the condensing temperature, which is the temperature of the refrigerant in the condenser, is controlled to be approximately 50 degrees C by controlling the frequency of the compressor 10 or the rotation speed of the fan (not illustrated) attached to the heat source side heat exchanger 12. Also, by controlling the expansion device 16, the degree of subcooling of the refrigerant at the condenser outlet is controlled to be approximately 10 degrees C. That is, when the condensing temperature is approximately 50 degrees C, the temperature of the refrigerant at the condenser outlet is controlled to be approximately 40 degrees C and the refrigerant flows out of the condenser. Thus, the refrigerant flowing into the expansion device 16, is at a temperature of approximately 40 degrees C and at the saturation pressure at a temperature of approximately 50 degrees C.

When control performance (transient characteristics) in the expansion device 16 is taken into consideration, the refrigerant flowing into the expansion device 16 is at a temperature of approximately 40 to 50 degrees C and at the saturation pressure at a temperature of approximately 50 degrees C. Thus, under these temperature and pressure conditions and the refrigerant has a high solubility in refrigerating machine oil, disproportionation reaction of the refrigerant is less likely to occur. In practical use, when the refrigerant is under these temperature and pressure conditions and the refrigerant has a solubility of 50 wt% (weight percent) or above in the refrigerating machine oil, a large amount of refrigerant dissolves in the refrigerating machine oil, thereby controlling disproportionation reaction. That is, when the refrigerant flowing through the expansion device 16 dissolves in the refrigerating machine oil with a solubility of 50 wt% (weight percent) or above, disproportionation reaction is less likely to occur even if the refrigerant collides with the valve body 47.

[Accumulator 19]

Fig. 9 is a schematic diagram illustrating a configuration of an accumulator of the refrigeration cycle apparatus according to Embodiment 1 of the present invention. Fig. 9 is a side view illustrating an inner part of the accumulator 19 as viewed from a side, where the accumulator 19 includes an inflow pipe 49, an outflow pipe 50, an oil return hole 51 provided in the outflow pipe 50, and a shell 52 of the accumulator 19. The inflow pipe 49 and the outflow pipe 50 are structured to be inserted in the shell 52.

In Fig. 9, the solid arrows indicate directions of refrigerant flow. The refrigerant flows into the shell 52 through the inflow pipe 49, expands in volume by being released into the shell 52, and then flows out of the outflow pipe 50. An inlet 50a of the outflow pipe 50 is located at a position higher than an outlet 49a of the inflow pipe 49, and installed at a position where the refrigerant flowing into the shell 52 through the inflow pipe 49 does not flow directly into the outflow pipe 50 by inertia forces and gravity. The oil return hole 51 provided in the outflow pipe 50 serves the function of causing the refrigerant in which the refrigerating machine oil is dissolved collected in a lower part of the shell 52 to flow into the outflow pipe 50, thereby returning the refrigerating machine oil to the compressor 10.

In the refrigeration cycle apparatus 100, during cooling operation, high-temperature, high-pressure liquid refrigerant and low-temperature, low-pressure gas refrigerant flow through the extension pipes 4 connecting the outdoor unit 1 with the indoor units 2. Also, during heating operation, high-temperature, high-pressure gas refrigerant and two-phase refrigerant mixed with low-temperature, low-pressure gas and a liquid flow through the extension pipes 4. Liquid refrigerant is higher in density than gas refrigerant, and consequently an amount of refrigerant in the extension pipes 4 during cooling operation is larger than that during heating operation. Thus, surplus refrigerant is produced in the refrigerant circuit during heating operation.

Also, when any of the indoor units 2a to 2d remain stopped, surplus refrigerant is produced accordingly. Thus, something to accumulate the surplus refrigerant needs to be provided in the refrigerant circuit and the accumulator 19 is installed on the suction side of the compressor 10. The surplus refrigerant is accumulated in the accumulator 19. In an operational state in which surplus refrigerant is produced such as a heating operation state, to accumulate the surplus refrigerant, refrigerant is supplied to the accumulator 19 in a two-phase state in which gas and liquid are mixed.

The inflow pipe 49 is inserted in the shell 52 from above and bent sideways in the shell 52. The outlet 49a of the inflow pipe 49 is installed at some distance from an inner wall surface 52a of the shell 52 at a position out of contact with the inner wall surface 52a of the shell 52. With the outlet 49a installed in this way, the refrigerant flowing into the shell 52 through the inflow pipe 49 is caused to collide with the inner wall surface 52a of the shell 52, and a liquid refrigerant component of the two-phase refrigerant and the refrigerating machine oil are separated from each other and accumulated in the lower part of the shell 52 by gravity.

As described above, during cooling operation, low-temperature, low-pressure gas refrigerant flows into the accumulator 19, and during heating operation, surplus refrigerant is produced in the refrigerant circuit and thus two-phase refrigerant in which gas and liquid coexist flows into the accumulator 19. Note that in the refrigeration cycle apparatus 100 of a multi-air-conditioning apparatus or another related apparatus equipped with plural indoor units 2, surplus refrigerant is produced even during cooling operation depending on changes in the number of running indoor units 2, and two-phase refrigerant may flow into the accumulator 19.

When the two-phase refrigerant flows in through the inflow pipe 49 and collides with the inner wall surface 52a of the shell 52 of the accumulator 19 and great collision energy is generated, the refrigerant may undergo disproportionation reaction. Note that when surplus refrigerant is produced, two-phase refrigerant with a quality of 0.8 to 0.99 (both inclusive) flows into the accumulator 19. Even in this case, when refrigerating machine oil miscible with the refrigerant is used, molecules of the refrigerating machine oil exist among the refrigerant molecules, making disproportionation reaction of the refrigerant less likely to occur.

Note that although the illustrated accumulator 19 is elongated in a vertical direction (upright direction), the accumulator 19 may be elongated in a lateral direction and may have any shape.

Also, as described above, usually with the building multi-air-conditioning apparatus or another related apparatus, the evaporating temperature, which is the temperature of the refrigerant in the evaporator, is controlled to be approximately 0 degrees C by controlling the frequency of the compressor 10 or the rotation speed of the fan (not illustrated) attached to the heat source side heat exchanger 12. Also, by controlling the expansion device 16, the degree of superheat of the refrigerant at the evaporator outlet is controlled to be approximately 0 to 5 degrees C. That is, the refrigerant flowing out of the evaporator and into the accumulator 19 is at a temperature of approximately 0 degrees C and at the saturation pressure at a temperature of approximately 0 degrees C.

Thus, under these temperature and pressure conditions, when the refrigerant has a high solubility in the refrigerating machine oil, disproportionation reaction of the refrigerant is less likely to occur. In practical use, when the refrigerant has a solubility of 50 wt% (weight percent) or above in the refrigerating machine oil under these temperature and pressure conditions, a large amount of refrigerant is dissolved in the refrigerating machine oil, thereby controlling disproportionation reaction. That is, when the refrigerant flowing into the accumulator 19 dissolves in the refrigerating machine oil with a solubility of 50 wt% (weight percent) or above, disproportionation reaction is less likely to occur even if the refrigerant collides with the inner wall surface 52a of the accumulator 19.

Also, refrigerating machine oil has a two-layer separation temperature. When refrigerating machine oil miscible with the refrigerant is used and refrigerant temperature is higher than the two-layer separation temperature, the refrigerant dissolves in the refrigerating machine oil. However, when the refrigerant temperature falls below the two-layer separation temperature, the solution is separated into two layers: a layer in which a refrigerant concentration is high, i.e., abundance of the refrigerating machine oil is low, and a layer in which a concentration of the refrigerating machine oil is high, i.e., the refrigerant concentration is low. When the two-layer separation occurs, in a layer in which refrigerant concentration is high, because of low refrigerating machine oil concentration, disproportionation reaction of the refrigerant is likely to occur due to collision energy or another factor. Thus, to avoid two-layer separation in an operating range of the refrigeration cycle apparatus, the two-layer separation temperature is preferred to be as low as possible, and has to be at least lower than the evaporating temperature. Because the evaporating temperature is usually controlled to be 0 degrees C, the two-layer separation temperature has to be at least lower than 0 degrees C.

Note that when the heat source side heat exchanger 12 is acting as an evaporator and air temperature around the heat source side heat exchanger 12, i.e., outside temperature, is low, the evaporating temperature becomes lower than 0 degrees C. In this case, the two-layer separation temperature of the refrigerating machine oil is preferred to be lower than the evaporating temperature and required to be still lower than 0 degrees C.

[Extension pipe 4]

As described above, the refrigeration cycle apparatus 100 according to Embodiment 1 has a few operation modes. In these operation modes, refrigerant flows through the extension pipes 4 connecting the outdoor unit 1 with the indoor units 2.

Note that although the high-pressure detector 37 and the low-pressure detector 38 are installed to maintain high pressure and low pressure at target values in the refrigeration cycle, a temperature detector configured to detect saturation temperature may be installed alternatively.

Also, although the first refrigerant flow switching device 11 has been shown as if being a four-way valve, the first refrigerant flow switching device 11 is not limited to the four-way valve, and plural two-way flow switching valves or three-way flow switching valves may be used to allow the refrigerant to flow in a similar manner.

Also, the heat source side heat exchanger 12 and the load side heat exchangers 15a to 15d are generally equipped with a fan, often facilitating condensation or evaporation by sending air, but the present invention is not limited to this configuration. For example, a panel heater or another component using radiation can be used as the load side heat exchangers 15a to 15d and a water-cooled type heat exchanger configured to move heat using water or an antifreeze solution can be used as the heat source side heat exchanger 12. Any heat exchanger can be used as long as the heat exchanger can transfer and receive heat.

Also, although description has been given above by taking as an example a case in which four load side heat exchangers 15a to 15d are provided, any number of load side heat exchangers can be connected. Furthermore, plural outdoor units 1 may be connected making up one refrigeration cycle.

Also, although description has been given by taking as an example the refrigeration cycle apparatus 100 of a cooling-heating switch type in which the indoor unit 2 performs only one of cooling operation and heating operation, the present invention is not limited to this configuration. For example, the present invention can also be applied to a refrigeration cycle apparatus that allows each indoor unit 2 to select either cooling operation or heating operation as desired and enables coexistence of indoor units 2 performing cooling operation and indoor units 2 performing heating operation in the system as a whole. This configuration achieves effects similar to those described above.

Besides, the present invention is also applicable to an air-conditioning apparatus, such as a room air-conditioner, in which only one indoor unit 2 can be connected and to a refrigeration system connected with a show case or unit cooler, and achieves effects similar to those described above when the present invention is applied to any refrigeration cycle apparatus that uses a refrigeration cycle.

Embodiment 2

Embodiment 2 of the present invention will be described with reference to drawings. Differences from Embodiment 1 will mainly be described below. Note that variations applied to components of Embodiment 1 are similarly applied to corresponding components of Embodiment 2.

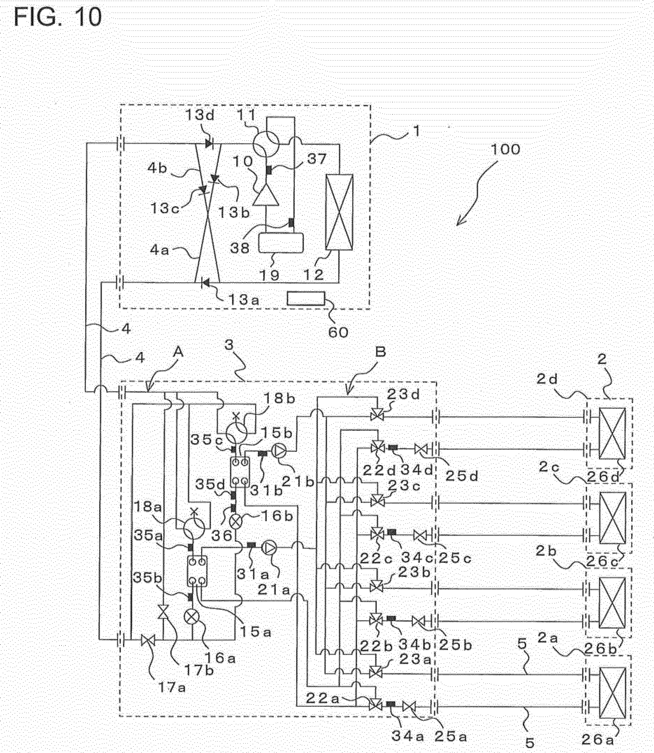

Fig. 10 is a circuit block diagram of the refrigeration cycle apparatus according to Embodiment 2 of the present invention.

The refrigeration cycle apparatus 100 shown in Fig. 10 includes a refrigerant circuit A in which the outdoor unit 1 and a heat medium converter 3 that is a relay are connected via extension pipes 4 to circulate the refrigerant. Also, the refrigeration cycle apparatus 100 includes a heat medium circuit B in which the heat medium converter 3 and the indoor units 2 are connected via pipes (heat medium pipes) 5 to circulate a heat medium such as water and brine. The heat medium converter 3 includes the load side heat exchanger 15a and the load side heat exchanger 15b configured to exchange heat between the refrigerant circulating in the refrigerant circuit A and the heat medium circulating in the heat medium circuit B.

In Fig. 10, a plate-type heat exchanger is used as the load side heat exchanger 15a and the load side heat exchanger 15b. The plate-type heat exchanger (12 or 15) is structured so that plural plates are stacked one on top of another, forming a passage between each pair of plates and that the refrigerant and the heat medium flow alternately in each passage, thereby exchanging heat between the refrigerant and the heat medium.

Grooves are provided on surfaces of the plates, which are heat transfer surfaces of the plate type heat exchanger, forming concavo-convex surfaces serving as a heat transfer enhancement mechanism configured to enhance heat transfer. Various shapes are available for the grooves, but the grooves differ in shape from the grooves 43 of the heat transfer tubes 41 of the plate fin tube heat exchanger. However, there is no difference in that the grooves are provided to disturb the flow of refrigerant and improve the heat transfer coefficient and the same as Embodiment 1 can be said. Thus, the use of refrigerating machine oil miscible with the refrigerant makes disproportionation reaction of the refrigerant less likely to occur. Note that again in the plate type heat exchanger, as long as the heat transfer surfaces have concavo-convex surfaces, the grooves of the concavo-convex surfaces may have any shape, and can achieve similar effects.

Operation modes performed by the refrigeration cycle apparatus 100 include a cooling only operation mode in which all the operating indoor units 2 perform cooling operation and a heating only operation mode in which all the operating indoor units 2 perform heating operation. Also, there are a cooling main operation mode performed when the cooling load is larger and a heating main operation mode performed when the heating load is larger.

[Cooling only operation mode]

In the cooling only operation mode, the high-temperature, high-pressure gas refrigerant discharged from the compressor 10 flows into the heat source side heat exchanger 12 through the first refrigerant flow switching device 11, condenses and liquefies into high-pressure liquid refrigerant by transferring heat to ambient air, and flows out of the outdoor unit 1 through a check valve 13a. Then, the refrigerant flows into the heat medium converter 3 through the extension pipe 4. The refrigerant flowing into the heat medium converter 3 passes through an open-close device 17a, and expands into low-temperature, low-pressure, two-phase refrigerant in the expansion device 16a and the expansion device 16b. The two-phase refrigerant flows into each of the load side heat exchanger 15a and the load side heat exchanger 15b acting as evaporators, receives heat from the heat medium circulating through the heat medium circuit B, and thereby becomes low-temperature, low-pressure, gas refrigerant. The gas refrigerant flows out of the heat medium converter 3 through the second refrigerant flow switching device 18a and the second refrigerant flow switching device 18b. Then, the refrigerant flows into the outdoor unit 1 again through the extension pipe 4. The refrigerant flowing into the outdoor unit 1 passes through a check valve 13d and is sucked into the compressor 10 again through the first refrigerant flow switching device 11 and the accumulator 19.

In the heat medium circuit B, the heat medium is cooled by the refrigerant both in the load side heat exchanger 15a and the load side heat exchanger 15b. The cooled heat medium is caused to flow in the pipes 5 by a pump 21 a and a pump 21 b. The heat medium flowing into the use side heat exchangers 26a to 26d through second heat medium flow switching devices 23a to 23d receives heat from the indoor air. The indoor air is cooled, and thereby cools indoor space 7. The refrigerant flowing out of the use side heat exchangers 26a to 26d flows into heat medium flow control devices 25a to 25d, passes through first heat medium flow switching devices 22a to 22d, flows into the load side heat exchanger 15a and the load side heat exchanger 15b to be cooled, and is sucked again into the pump 21 a and the pump 21 b. Note that any of the heat medium flow control devices 25a to 25d corresponding to those of the use side heat exchangers 26a to 26d that are free from heat loads are fully closed. Regarding any of the heat medium flow control devices 25a to 25d corresponding to those of the use side heat exchangers 26a to 26d that are under heat loads, opening degrees are adjusted and the heat loads on the use side heat exchangers 26a to 26d are adjusted.

[Heating only operation mode]

In the heating only operation mode, the high-temperature, high-pressure gas refrigerant discharged from the compressor 10 passes through a first connection pipe 4a and a check valve 13b via the first refrigerant flow switching device 11 and flows out of the outdoor unit 1. Then, the refrigerant flows into the heat medium converter 3 through the extension pipe 4. The refrigerant flowing into the heat medium converter 3 passes through the second refrigerant flow switching device 18a and the second refrigerant flow switching device 18b, flows into each of the load side heat exchanger 15a and the load side heat exchanger 15b, transfers heat to the heat medium circulating through the heat medium circuit B, and becomes high-pressure liquid refrigerant. The high-pressure liquid refrigerant expands into low-temperature, low-pressure, two-phase refrigerant in the expansion device 16a and the expansion device 16b and flows out of the heat medium converter 3 through an open-close device 17b. Then, the refrigerant flows into the outdoor unit 1 again through the extension pipe 4. The refrigerant flowing into the outdoor unit 1 passes through a second connection pipe 4b and a check valve 13c, flows into the heat source side heat exchanger 12 acting as an evaporator, receives heat from ambient air, and thereby becomes low-temperature, low-pressure, gas refrigerant. The gas refrigerant is sucked into the compressor 10 again through the first refrigerant flow switching device 11 and the accumulator 19. Note that movement of the heat medium in the heat medium circuit B is the same as in the cooling only operation mode. In the heating only operation mode, the heat medium is heated by the refrigerant in the load side heat exchanger 15a and the load side heat exchanger 15b and heat is transferred to the indoor air in the use side heat exchanger 26a and the use side heat exchanger 26b to heat the indoor space 7.

[Cooling main operation mode]

In cooling main operation mode, the high-temperature, high-pressure gas refrigerant discharged from the compressor 10 flows into the heat source side heat exchanger 12 through the first refrigerant flow switching device 11, condenses into two-phase refrigerant by transferring heat to ambient air, and flows out of the outdoor unit 1 through the check valve 13a. Then, the refrigerant flows into the heat medium converter 3 through the extension pipe 4. The refrigerant flowing into the heat medium converter 3 flows into the load side heat exchanger 15b acting as a condenser through the second refrigerant flow switching device 18b, transfers heat to the heat medium circulating through the heat medium circuit B, and becomes high-pressure liquid refrigerant. The high-pressure liquid refrigerant expands into low-temperature, low-pressure, two-phase refrigerant in the expansion device 16b. The two-phase refrigerant flows into the load side heat exchanger 15a acting as an evaporator through the expansion device 16a, receives heat from the heat medium circulating through the heat medium circuit B, and thereby becomes low-pressure gas refrigerant, and flows out of the heat medium converter 3 through the second refrigerant flow switching device 18a. Then, the refrigerant flows into the outdoor unit 1 again through the extension pipe 4. The refrigerant flowing into the outdoor unit 1 passes through the check valve 13d and is sucked into the compressor 10 again through the first refrigerant flow switching device 11 and the accumulator 19.

In the heat medium circuit B, heating energy of the refrigerant is transmitted to the heat medium by the load side heat exchanger 15b. Then, the heated heat medium is caused to flow in the pipe 5 by the pump 21 b. The heat medium flowing into the use side heat exchangers 26a to 26d from which a heating request is given via the first heat medium flow switching devices 22a to 22d and the second heat medium flow switching devices 23a to 23d rejects heat to the indoor air. The indoor air is heated and thereby heats the indoor space 7. On the other hand, the cooling energy of the refrigerant is transmitted to the heat medium by the load side heat exchanger 15a. Then, the cooled heat medium is caused to flow in the pipe 5 by the pump 21a. The heat medium flowing into the use side heat exchangers 26a to 26d from which a cooling request is given via the first heat medium flow switching devices 22a to 22d and the second heat medium flow switching devices 23a to 23d receives heat from the indoor air. The indoor air is cooled and thereby cools the indoor space 7. Note that any of the heat medium flow control devices 25a to 25d corresponding to those of the use side heat exchangers 26a to 26d that are free from heat loads are fully closed. Regarding any of the heat medium flow control devices 25a to 25d corresponding to those of the use side heat exchangers 26a to 26d that are under heat loads, the opening degrees are adjusted and the heat loads on the use side heat exchangers 26a to 26d are adjusted.

[Heating main operation mode]

In heating main operation mode, the high-temperature, high-pressure gas refrigerant discharged from the compressor 10 passes through the first connection pipe 4a and the check valve 13b via the first refrigerant flow switching device 11 and flows out of the outdoor unit 1. Then, the refrigerant flows into the heat medium converter 3 through the extension pipe 4. The refrigerant flowing into the heat medium converter 3 flows into the load side heat exchanger 15b acting as a condenser through the second refrigerant flow switching device 18b, transfers heat to the heat medium circulating through the heat medium circuit B, and becomes high-pressure liquid refrigerant. The high-pressure liquid refrigerant expands into low-temperature, low-pressure, two-phase refrigerant in the expansion device 16b. The two-phase refrigerant flows into the load side heat exchanger 15a acting as an evaporator through the expansion device 16a, receives heat from the heat medium circulating through the heat medium circuit B, and flows out of the heat medium converter 3 through the second refrigerant flow switching device 18a. Then, the refrigerant flows into the outdoor unit 1 again through the extension pipe 4. The refrigerant flowing into the outdoor unit 1 passes through the second connection pipe 4b and the check valve 13c, flows into the heat source side heat exchanger 12 acting as an evaporator, receives heat from ambient air, and thereby becomes low-temperature, low-pressure, gas refrigerant. The gas refrigerant is sucked into the compressor 10 again through the first refrigerant flow switching device 11 and the accumulator 19. Note that movement of the heat medium in the heat medium circuit B, as well as operations of the first heat medium flow switching devices 22a to 22d, the second heat medium flow switching devices 23a to 23d, the heat medium flow control devices 25a to 25d and the use side heat exchangers 26a to 26d are the same as in the cooling main operation mode.

[Types of refrigerant, heat exchanger (12 or 26), expansion device 16, accumulator 19]

Regarding the type of refrigerant, the heat exchanger (12 or 26), the expansion device 16, and the accumulator 19, those similar to Embodiment 1 can be used, and similar effects can be achieved.

[Extension pipe 4 and pipe 5]

In each of the operation modes according to Embodiment 2, the refrigerant flows through the extension pipes 4 connecting the outdoor unit 1 with the heat medium converter 3 and the heat medium such as water and an antifreeze solution is passed through the pipes 5 connecting the heat medium converter 3 with the indoor units 2.

When a heating load and a cooling load coexist on the use side heat exchangers 26, the first heat medium flow switching device 22 and the second heat medium flow switching device 23 corresponding to the use side heat exchanger 26 performing heating operation are switched to the passage connected to the load side heat exchanger 15b for heating. Also, the first heat medium flow switching device 22 and the second heat medium flow switching device 23 corresponding to the use side heat exchanger 26 performing cooling operation are switched to the passage connected to the load side heat exchanger 15a for cooling. Consequently, each indoor unit 2 can perform heating operation and cooling operation freely.

Note that the first heat medium flow switching device 22 and the second heat medium flow switching device 23 may be of any type, such as a three-way valve capable of switching a three-way passage or a combination of two on-off valves or other similar valves configured to open and close a two-way passage as long as the flow switching devices can switch among passages. Also, a valve, such as a stepping-motor driven mixing valve, capable of changing flow rates of a three-way passage or a combination of two electronic expansion valves or other similar valves capable of changing flow rates of a two-way passage may be used as the first heat medium flow switching device 22 and the second heat medium flow switching device 23. Furthermore, other than two-way valves, a control valve having a three-way passage may be used as the heat medium flow control device 25 and installed together with a bypass pipe configured to bypass the use side heat exchanger 26. Also, a stepping-motor-driven valve, such as a two-way valve and a three-way valve with one end closed, capable of controlling flow rates of passages may be used as the heat medium flow control device 25. Also, using an on-off valve configured to open and close a two-way passage as the heat medium flow control device 25, an average flow rate may be controlled by repeatedly turning on and off the on-off valve.

Also, although the first refrigerant flow switching device 11 and the second refrigerant flow switching device 18 have been shown as if being four-way valves, the first refrigerant flow switching device 11 and the second refrigerant flow switching device 18 are not limited to the four-way valves, and plural two-way flow switching valves or three-way flow switching valves may be used to allow the refrigerant to flow in a similar manner.

Also, the same is true when only a single use side heat exchanger 26 and a single heat medium flow control device 25 are connected. Furthermore, there is naturally no problem even when plural devices that perform same functions are installed as the load side heat exchanger 15 and the expansion device 16. Furthermore, although description has been given by taking as an example a case in which the heat medium flow control device 25 is incorporated in the heat medium converter 3, the heat medium flow control device 25 is not limited to this configuration, and the heat medium flow control device 25 may be incorporated in the indoor unit 2 or the heat medium converter 3 and the indoor units 2 may be configured to be separate units.

Liquids available for use as the heat medium include, for example, brine (antifreeze solution), water, a mixture of brine and water, and a mixture of water and an additive with a high anticorrosive effect. Thus, in the refrigeration cycle apparatus 100, even when the heat medium leaks into the indoor space 7 through the indoor unit 2, use of the heat medium high in safety contributes to improvement of safety.

Also, the heat source side heat exchanger 12 and the use side heat exchangers 26a to 26d are generally equipped with a fan, often facilitating condensation or evaporation by sending air, but the present invention is not limited to this configuration. For example, a panel heater or another component using radiation can be used as the use side heat exchangers 26a to 26d. Also, a water-cooled type heat exchanger configured to move heat using water or an antifreeze solution can be used as the heat source side heat exchanger 12. Any heat exchanger can be used as long as the heat exchanger is structured to be able to transfer and receive heat.

Also, although description has been given above by taking as an example a case in which four use side heat exchangers 26a to 26d are provided, any number of use side heat exchangers can be connected. Furthermore, plural outdoor units 1 may be connected making up one refrigeration cycle.

Also, although description has been given by taking as an example a case in which two load side heat exchangers 15a and 15b are provided, naturally, the number of load side heat exchangers is not limited to two, and any number of load side heat exchangers may be installed as long as the heat medium can be cooled and heated.

Also, the number of pumps 21 a or 21 b is not limited to one, and plural pumps of small capacity may be arranged in parallel.

Also, although a system that enables coexistence of indoor units 2 performing cooling operation and indoor units 2 performing heating operation has been taken as an example in describing a system in which the compressor 10, four-way valve (first refrigerant flow switching device) 11, and heat source side heat exchanger 12 are housed in the outdoor unit 1, the use side heat exchanger 26 configured to exchange heat between the air in the air-conditioned space and the refrigerant is housed in the indoor units 2, the load side heat exchanger 15 and the expansion device 16 are housed in the heat medium converter 3, the outdoor unit 1 and the heat medium converter 3 are connected by the extension pipes 4 to circulate the refrigerant, each indoor unit 2 and the heat medium converter 3 are connected by a pair of pipes 5 to circulate the heat medium, and heat is exchanged between the refrigerant and the heat medium by the load side heat exchanger 15, the present invention is not limited to this configuration. For example, the present invention is also applicable to a system in which the outdoor unit 1 described in Embodiment 1 and the heat medium converter 3 are combined, allowing the indoor units 2 to perform only cooling operation or heating operation, and similar effects can be achieved. Reference Signs List

1 heat source unit (outdoor unit) 2, 2a, 2b, 2c, 2d indoor unit 3 heat medium converter (relay) 4 extension pipe (refrigerant pipe) 4a first connection pipe 4b second connection pipe 5 pipe (heat medium pipe) 6 outdoor space 7 indoor space 8 space above a ceiling or other spaces different from outdoor space and indoor space 9 building 10 compressor 11 first refrigerant flow switching device (four-way valve) 12 heat source side heat exchanger (first heat exchanger) 13a, 13b, 13c, 13d check valve 15, 15a, 15b, 15c, 15d load side heat exchanger (second heat exchanger) 16, 16a, 16b, 16c, 16d expansion device 17a, 17b open-close device 18, 18a, 18b second refrigerant flow switching device 19 accumulator 21 a, 21 b pump 22, 22a, 22b, 22c, 22d first heat medium flow switching device 23, 23a, 23b, 23c, 23d second heat medium flow switching device 25, 25a, 25b, 25c, 25d heat medium flow control device 26, 26a, 26b, 26c, 26d use side heat exchanger 27 load side heat exchanger liquid refrigerant temperature detector 28 load side heat exchanger gas refrigerant temperature detector 37 high-pressure detector 38 low-pressure detector 41 heat transfer tube 42 passage 43 groove 43a concavo-convex surface 43b concave portion 43c convex portion 44 first connecting pipe 45 second connecting pipe 46 expansion unit 47 valve body 48 motor 49 inflow pipe 49a outlet 50 outflow pipe 50a inlet 51 oil return hole 52 shell 52a inner wall surface 60 controller 100 refrigeration cycle apparatus A refrigerant circuit B heat medium circuit

## Claims

1. A refrigeration cycle apparatus comprising a refrigeration cycle connecting a compressor, a first heat exchanger, an expansion device, and a second heat exchanger by refrigerant pipes,
the refrigeration cycle being filled with a single component refrigerant of a substance having a property of undergoing disproportionation reaction or a mixed refrigerant containing a substance having a property of undergoing disproportionation reaction and a refrigerating machine oil miscible with the refrigerant.

2. The refrigeration cycle apparatus of claim 1, wherein the two-layer separation temperature is lower than 0 degrees C.

3. The refrigeration cycle apparatus of claim 1 or 2, wherein the refrigerant has a solubility of 50 weight percent or above in the refrigerating machine oil when the refrigerant is at a temperature of 50 degrees C and at a saturation pressure at a temperature of 50 degrees C.

4. The refrigeration cycle apparatus of claim 1 or 2, wherein the refrigerant has a solubility of 50 weight percent or above in the refrigerating machine oil when the refrigerant is at a temperature of 40 degrees C and at a saturation pressure at a temperature of 50 degrees C.

5. The refrigeration cycle apparatus of claim 1 or 2, wherein the refrigerant has a solubility of 50 weight percent or above in the refrigerating machine oil when the refrigerant is at a temperature of 0 degrees C and at a saturation pressure at a temperature of 0 degrees C.

6. The refrigeration cycle apparatus of any one of claims 1 to 5, wherein the first heat exchanger or the second heat exchanger acts as a condenser or an evaporator and one or more passages in the first heat exchanger or the second heat exchanger through which the refrigerant flows are provided with a heat transfer enhancement mechanism configured to enhance heat transfer.

7. The refrigeration cycle apparatus of claim 6, wherein the heat transfer enhancement mechanism is a concavo-convex surface provided on a heat transfer surface of a heat transfer tube forming the one or more passages.

8. The refrigeration cycle apparatus of claim 7, wherein a concave portion of the concavo-convex surface is a spiral-shaped groove.

9. The refrigeration cycle apparatus of any one of claims 6 to 8, wherein refrigerant in liquid state or in two-phase state flows in a location of any of the one or more passages.

10. The refrigeration cycle apparatus of any one of claims 1 to 9, wherein the expansion device includes two connecting pipes,
an expansion unit provided between the two connecting pipes, configured to be smaller in cross sectional area than an internal cross sectional area of each of the two connecting pipes, and configured to allow the refrigerant to pass, and
a valve body inserted in the expansion unit and configured to change an opening area of a passage in the expansion unit.

11. The refrigeration cycle apparatus of claim 10, wherein the valve body in the expansion device is configured to rotate to change the opening area.

12. The refrigeration cycle apparatus of claim 10 or 11, wherein refrigerant in liquid state or in two-phase state is caused to flow into the valve body.

13. The refrigeration cycle apparatus of any one of claims 10 to 12, wherein a flow direction of the refrigerant flowing into the expansion device when the second heat exchanger is caused to operate as a condenser is opposite to a flow direction of the refrigerant flowing into the expansion device when the second heat exchanger is caused to operate as an evaporator.

14. The refrigeration cycle apparatus of any one of claims 1 to 13, further comprising an accumulator provided on a suction side of the compressor and configured to accumulate the refrigerant, wherein the accumulator includes an inflow pipe configured to cause the refrigerant to flow in, and
an outlet of the inflow pipe is installed to face an inner wall surface of the accumulator at a position out of contact with the inner wall surface of the accumulator.

15. The refrigeration cycle apparatus of claim 14, having an operational state in which refrigerant in two-phase state is caused to flow into the accumulator.

16. The refrigeration cycle apparatus of claim 15, having an operational state in which the refrigerant in two-phase state with a quality of 0.8 to 0.99 both inclusive is caused to flow into the accumulator.

17. The refrigeration cycle apparatus of any one of claims 1 to 16, wherein the substance having the property of undergoing disproportion reaction is 1,1,2-trifluoroethylene.

18. The refrigeration cycle apparatus of any one of claims 1 to 17, wherein the refrigerating machine oil has either polyol ester or polyvinyl ether as a major component.

19. A refrigeration cycle apparatus comprising a refrigeration cycle connecting a compressor, a first heat exchanger, an expansion device, and a second heat exchanger by refrigerant pipes, wherein
the refrigeration cycle is filled with a single component refrigerant of 1,1,2-trifluoroethylene or a mixed refrigerant containing 1,1,2-trifluoroethylene and a refrigerating machine oil miscible with the refrigerant,
the refrigerating machine oil has either polyol ester or polyvinyl ether as a major component and two-layer separation temperature of the refrigerating machine oil is lower than 0 degrees C, and
the refrigerant in liquid state or in two-phase state flows through at least any one of the first heat exchanger, the second heat exchanger, and the expansion device and a solubility of the flowing refrigerant in liquid state or in two-phase state in the refrigerating machine oil is 50 weight percent or above.

FIG. 1

FIG. 2

FIG. 3

## FIG. 4

## FIG. 5

PRESSURE

T3°C

T2°C

T1°C

T1<T2<T3

SOLUBILITY

## FIG. 6

43a

41

42

43b

43c

43

## FIG. 7

43a   43b   41

42   43c   43

FIG. 8

16 (16a TO 16d)

48

44

47

46

45

FIG. 9

50

49

19

52

50a

49a

52a

51

FIG. 10

## INTERNATIONAL SEARCH REPORT

| International application No. |
|---|
| PCT/JP2014/057047 |

A. CLASSIFICATION OF SUBJECT MATTER
*F25B1/00*(2006.01)i

According to International Patent Classification (IPC) or to both national classification and IPC

B. FIELDS SEARCHED

Minimum documentation searched (classification system followed by classification symbols)
F25B1/00

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2012-131994 A   (JX Nippon Oil & Energy Corp.),<br>12 July 2012 (12.07.2012),<br>paragraphs [0018] to [0142]<br>& US 2012/0132848 A1    & CN 102533392 A | 1,17-18<br>2-16,19 |
| X<br>Y | WO 2012/157764 A1  (Asahi Glass Co., Ltd.),<br>22 November 2012 (22.11.2012),<br>paragraphs [0001] to [0036]<br>(Family: none) | 1,17-18<br>2-16,19 |
| Y | JP 2013-210184 A  (Honeywell International Inc.),<br>10 October 2013 (10.10.2013),<br>paragraphs [0001] to [0005]<br>(Family: none) | 2-16,19 |

☒ Further documents are listed in the continuation of Box C.       ☐ See patent family annex.

| | |
|---|---|
| *     Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 29 May, 2014 (29.05.14) | 10 June, 2014 (10.06.14) |

| Name and mailing address of the ISA/<br>    Japanese Patent Office | Authorized officer |
|---|---|
| Facsimile No. | Telephone No. |

Form PCT/ISA/210 (second sheet) (July 2009)

## INTERNATIONAL SEARCH REPORT

International application No.

PCT/JP2014/057047

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2009-191212 A  (Idemitsu Kosan Co., Ltd.),<br>27 August 2009 (27.08.2009),<br>paragraphs [0002] to [0003]<br>& US 2011/0049414 A1    & EP 2243817 A1<br>& KR 10-2010-0120146 A  & CN 101945980 A<br>& TW 201000622 A | 2-16,19 |
| Y | JP 2009-257741 A  (Daikin Industries, Ltd.),<br>05 November 2009 (05.11.2009),<br>paragraphs [0060] to [0064]<br>(Family: none) | 6-16 |
| Y | JP 2010-25418 A  (Daikin Industries, Ltd.),<br>04 February 2010 (04.02.2010),<br>paragraphs [0036] to [0042]; fig. 1 to 2<br>(Family: none) | 10-16 |
| Y | WO 2013/051059 A1  (Mitsubishi Electric Corp.),<br>11 April 2013 (11.04.2013),<br>paragraphs [0013] to [0014]; fig. 1<br>(Family: none) | 14-16 |
| Y | JP 2013-124800 A  (Panasonic Corp.),<br>24 June 2013 (24.06.2013),<br>paragraph [0045]<br>& WO 2013/088638 A1 | 14-16 |

Form PCT/ISA/210 (continuation of second sheet) (July 2009)

**REFERENCES CITED IN THE DESCRIPTION**

**Patent documents cited in the description**

- WO 12157764 A